# FASCICULE DE BREVET EUROPEEN

(11) **EP 0 706 652 B1**
(45) Date de publication et mention de la délivrance du brevet: **21.11.2001**
(21) Numéro de dépôt: 95909833.6
(22) Date de dépôt: 15.02.1995
(51) Int. Cl.: G01N 29/26, G01N 29/22

(54) **DISPOSITIF DE CONTROLE NON DESTRUCTIF PAR ULTRASONS D'UNE PAROI CYLINDRIQUE ACCESSIBLE PAR UN PASSAGE ANNULAIRE DE FAIBLE LARGEUR**
VORRICHTUNG ZUR ZERSTÖRUNGSFREIEN ULTRASCHALLPRÜFUNG EINER ÜBER EINEN RINGKANAL GERINGER DICKE ZUGÄNGLICHEN ZYLINDERWAND
NON-DESTRUCTIVE ULTRASONIC TESTING DEVICE FOR TESTING A CYLINDRICAL WALL ACCESSIBLE THROUGH A NARROW RING-SHAPED PASSAGE

(30) Priorité: 17.03.1994 FR 9403154
(43) Date de publication de la demande: 17.04.1996
(73) Titulaire: FRAMATOME, 92400 Courbevoie (FR)
(72) Inventeur: DUMONT, Pascal, F-71880 Chatenoy-le-Royal (FR); DELTOUR, Damien, F-71510 Essertenne (FR)
(74) Mandataire: Bouget, Lucien
(86) Numéro de dépôt international: FR9500180
(87) Numéro de publication internationale: WO9525278

(56) Documents cités:
- EP-A- 0 289 207
- DE-A- 2 913 742
- DE-A- 3 410 954
- DE-A- 3 508 415
- GB-A- 2 198 532
- US-A- 4 368 642

## Description

L'invention concerne un dispositif de contrôle non destructif par ultrasons d'une surface accessible par un passage annulaire de faible largeur. L'invention peut s'appliquer en particulier au contrôle non destructif de la surface intérieure d'un adaptateur de forme tubulaire traversant le couvercle de la cuve d'un réacteur nucléaire à eau sous pression, sans démontage de la manchette thermique de l'adaptateur.

Les réacteurs nucléaires à eau sous pression comportent généralement une cuve renfermant le coeur du réacteur qui est plongé dans l'eau sous pression de refroidissement du réacteur.

La cuve de forme générale cylindrique comporte un couvercle de forme hémisphérique qui peut être rapporté sur sa partie supérieure. Le couvercle est percé d'ouvertures au niveau de chacune desquelles est fixée par soudure une pièce tubulaire de traversée constituant un adaptateur assurant le passage et la commande de déplacement d'un prolongateur d'une grappe de contrôle de la réactivité du coeur ou un passage de traversée d'un moyen de mesure à l'intérieur du coeur, tel qu'une colonne de thermocouples.

Sur les parties d'extrémité des adaptateurs, sont fixés les mécanismes de commande de déplacement des grappes de contrôle de la réactivité du coeur.

A l'intérieur de chacune des traversées tubulaires du couvercle de cuve est fixée, dans une disposition coaxiale par rapport à la pièce tubulaire de traversée et avec un certain jeu radial, une manchette thermique qui comporte une partie élargie diamétralement située à la partie supérieure de l'alésage de la pièce tubulaire de traversée et qui est montée libre en rotation à l'intérieur de la traversée.

Les prolongateurs des barres de commande de la réactivité du réacteur nucléaire et des colonnes de thermocouples traversent le couvercle de la cuve à l'intérieur des manchettes thermiques qui sont elles-mêmes disposées coaxialement à l'intérieur des adaptateurs des barres de commande ou plus généralement à l'intérieur des pièces tubulaires de traversée du couvercle.

De manière à accroître la fiabilité et la sûreté de fonctionnement des réacteurs nucléaires et pour prolonger leur durée de vie, les exploitants sont amenés à effectuer des contrôles de plus en plus nombreux des différents éléments constituant le réacteur nucléaire.

En particulier, il peut être nécessaire de contrôler l'état des pièces de traversée du couvercle de la cuve pour s'assurer de l'intégrité de ces pièces après un certain temps de fonctionnement du réacteur, en particulier dans la zone où ces pièces tubulaires sont soudées sur le couvercle de cuve.

Ces contrôles qui permettent de déceler et de réparer les défauts sur la surface interne cylindrique de la pièce tubulaire de traversée, doivent être effectués par l'intérieur de l'alésage de la pièce tubulaire et peuvent nécessiter en conséquence un démontage de la manchette thermique pour accéder à la surface intérieure de l'alésage de la traversée.

Les contrôles et réparations sont effectués lors d'un arrêt du réacteur nucléaire, le couvercle de la cuve étant démonté et placé au niveau d'un stand d'intervention.

Le démontage de la manchette thermique nécessite des opérations complexes dans la mesure où l'élargissement de la manchette thermique reposant sur une portée d'appui disposée à la partie supérieure de l'adaptateur interdit un démontage de la manchette par traction vers le bas, sur sa partie inférieure accessible en-dessous du couvercle.

En outre, il n'est pas possible non plus de démonter la manchette par traction vers le haut dans la mesure où les mécanismes de commande de grappes qui sont fixés par vissage et par soudage sur les parties supérieures des adaptateurs interdisent le passage de la manchette thermique.

Il est donc souhaitable de limiter les opérations de démontage complexes des manchettes thermiques aux adaptateurs présentant effectivement des défauts nécessitant des réparations.

Dans les demandes de brevet FR-A-92.15788 et 92-15789 déposées par la Société FRAMATOME, on a décrit un dispositif de contrôle de la surface intérieure d'un adaptateur comprenant une lame déformable en flexion portant une sonde de contrôle à l'une de ses extrémités et des moyens pour déplacer la sonde de contrôle fixée à l'extrémité de la lame, à l'intérieur de l'espace annulaire de faible largeur entre la chemise thermique et la surface intérieure d'un adaptateur. La lame est réalisée de préférence sous la forme d'un ruban stratifié qui absorbe les vibrations et la sonde de contrôle par un capteur à courants de Foucault.

Il est également envisagé à titre de variante d'utiliser un capteur à ultrasons pour détecter la présence éventuelle de fissures et mesurer leur profondeur à l'intérieur de l'adaptateur.

Cependant, il s'est avéré que l'utilisation d'un capteur à courants de Foucault ne permet pas de déterminer de manière très précise la localisation, la forme géométrique et surtout les dimensions des fissures décelées sur la surface intérieure de l'adapteur.

Afin de déterminer la gravité des fissures décelées et leur incidence sur le fonctionnement du réacteur nucléaire ainsi que la possibilité et les modalités de réparations des fissures, il est nécessaire de déterminer les dimensions de ces fissures et en particulier leur dimension dans le sens de l'épaisseur de l'adaptateur tubulaire.

Dans le GB-A-2.198.532, on décrit un dispositif permettant de déterminer la taille de fissures dans une structure immergée telle qu'une plate-forme pétrolière par des mesures de temps de vol d'ondes ultrasonores mettant en oeuvre deux transducteurs d'ultrasons qui peuvent être déplacés au contact de surfaces de la structure immergée.

Dans le DE-A-29 13 742, on décrit un robot permettant d'effectuer l'inspection de soudures d'une cuve de réacteur nucléaire, dans un espace annulaire entre la cuve et une enceinte isolante entourant la cuve. Le robot comporte un chariot porte-sonde et des moyens de déplacement du chariot dans la direction axiale et dans la direction circonférentielle de l'espace annulaire comportant des moteurs, des pignons et des crémaillères.

Le but de l'invention est donc de proposer un dispositif de contrôle non destructif par ultrasons d'une paroi cylindrique accessible par un passage annulaire de faible largeur dans la direction radiale de la paroi cylindrique, comportant une lame dont l'épaisseur est inférieure à la largeur dans la direction radiale du passage annulaire portant au moins une sonde de contrôle au voisinage de l'une de ses extrémités, la sonde comportant un premier transducteur d'ultrasons constituant un émetteur et un second transducteur d'ultrasons constituant un récepteur, ce dispositif permettant de réaliser la mesure, la localisation et la détermination de défauts tels que des fissures dans la paroi cylindrique.

Dans ce but, le premier et le second transducteurs sont montés pivotants, sur une partie d'extrémité de la lame comportant deux paires de bras sensiblement perpendiculaires à la direction longitudinale de la lame constitués sous la forme de lames de ressort élastique, autour de deux axes parallèles à la direction longitudinale de la lame, dans des dispositions écartées l'une de l'autre dans la direction transversale de la lame, de manière à se placer dans le passage annulaire dans deux position écartées l'une de l'autre dans une direction circonférentielle du passage annulaire.

Afin de bien faire comprendre l'invention, on va maintenant décrire, à titre d'exemple non limitatif, un dispositif de contrôle suivant l'invention et suivant plusieurs variantes de réalisation et son utilisation pour le contrôle de la surface intérieure d'un adaptateur de traversée du couvercle de la cuve d'un réacteur nucléaire à eau sous pression.

La figure 1 est une vue en élévation de la partie d'extrémité portant la sonde de contrôle, de la lame d'un dispositif de contrôle suivant l'invention en position dans le passage annulaire entre la surface intérieure d'un adaptateur et la manchette thermique.

La figure 2 est une vue dans la direction longitudinale de la lame, suivant 2-2 de la figure 1, de l'extrémité de la lame et de la sonde de contrôle en position de service dans le passage annulaire.

La figure 3 est une vue de côté de l'extrémité de la lame constituant le support de la sonde de contrôle du dispositif représenté sur les figures 1 et 2.

La figure 3A est une vue en coupe transversale suivant A-A de la figure 3.

La figure 4 est une vue frontale suivant 4 de la figure 3.

La figure 5 est une vue latérale analogue à la vue de la figure 3 d'une lame de support de sonde suivant une variante de réalisation.

La figure 6 est une vue schématique à grande échelle analogue à la vue de la figure 2 de la sonde de mesure d'un dispositif suivant l'invention en position de service au niveau d'une fissure dans la paroi d'un adaptateur de traversée du couvercle de la cuve d'un réacteur nucléaire à eau sous pression.

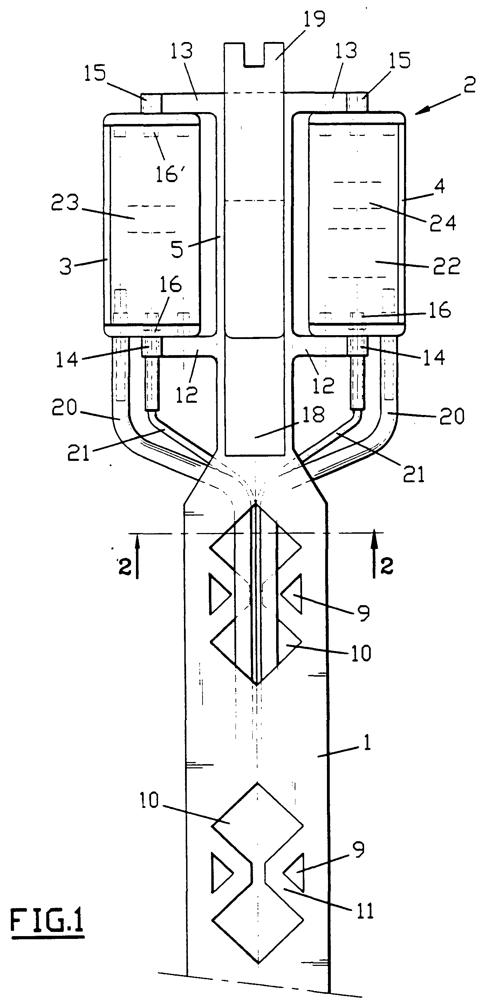

Sur la figure 1, on a représenté une partie d'extrémité d'une lame 1 en acier d'un dispositif de contrôle suivant l'invention, portant la tête de contrôle et de mesure ultrasonore 2. La tête de contrôle 2 comporte deux supports de transducteurs ultrasonores 3 et 4 montés sur un support 5 à l'extrémité de la lame 1.

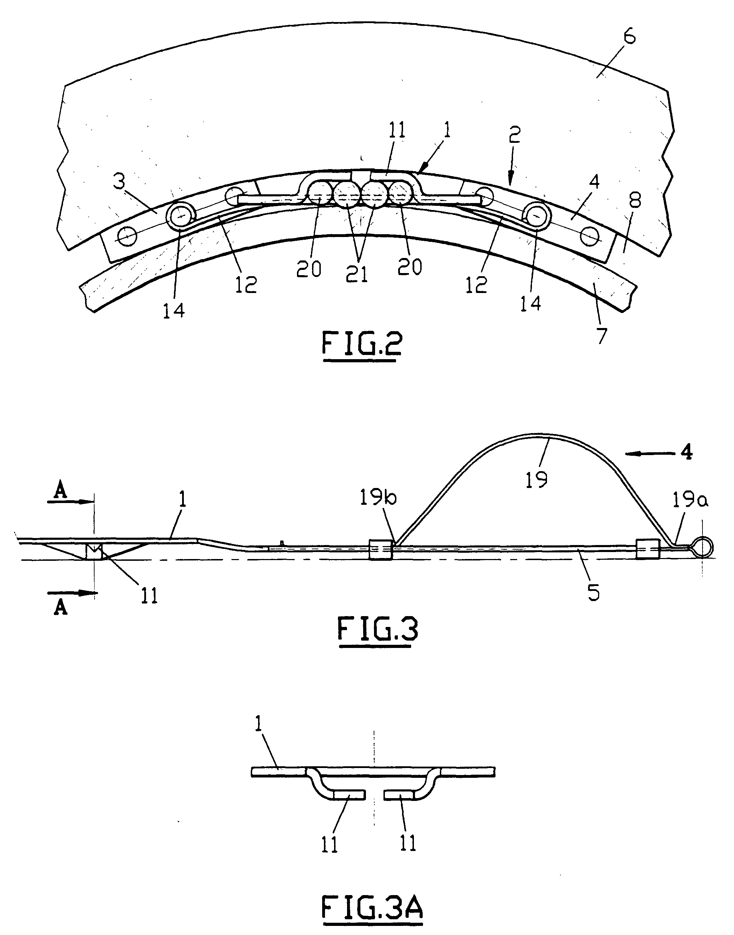

Comme il est visible sur la figure 2, la tête de mesure 2 comportant les supports de transducteurs 3 et 4 peut être introduite et déplacée par la lame 1 dans un passage annulaire 8 de faible largeur dans la direction radiale, entre la surface intérieure d'un adaptateur 6 et la surface extérieure d'une manchette thermique 7 coaxiale à l'adaptateur 6.

On peut utiliser par exemple un dispositif tel que décrit dans le FR-A-92-15788, pour introduire et déplacer la lame et la tête de mesure 2 à l'intérieur du passage annulaire, afin d'effectuer le contrôle de la surface intérieure de l'adaptateur, par exemple au niveau de sa soudure sur le couvercle de cuve.

La lame 1 comporte des découpes telles que 9 et 10 régulièrement espacées suivant sa direction longitudinale entre lesquelles sont ménagées des pattes 11 qui peuvent être mises en forme par pliage pour présenter une partie dans un plan parallèle au plan de la lame 1, comme représenté sur les figures 2, 3 et 3A, pour assurer le guidage et le maintien de la lame dans l'espace annulaire 8.

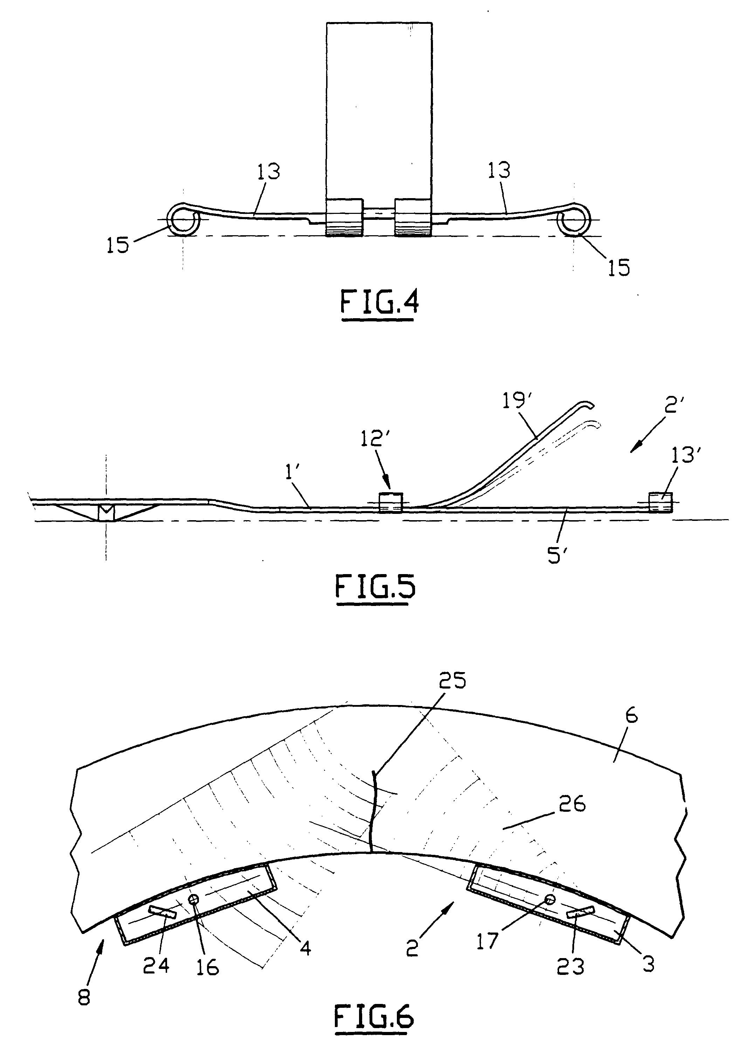

Le support 5 de la tête de mesure 2 sur lequel sont montés les porte-transducteurs 3 et 4 comporte deux paires de bras 12, 13 dans des directions transversales sensiblement perpendiculaires à la direction longitudinale de la lame 1 constitués sous la forme de ressorts à lame élastiques dont la partie d'extrémité extérieure est enroulée pour former deux paires de boucles 14 et 15 visibles sur les figures 2 et 4.

La lame 1 peut avoir une épaisseur de l'ordre de 0,5 mm. De préférence, les bras du support des porte-transducteurs ont une épaisseur réduite par rapport au corps de la lame, cette épaisseur pouvant être de l'ordre de 0,25 mm.

Le support de transducteur 3 est monté pivotant autour d'un axe parallèle à l'axe longitudinal de la lame, par l'intermédiaire de deux pivots 16 et 16' engagés à l'intérieur des parties d'extrémité en forme de boucles d'un bras 12 et d'un bras 13 qui sont alignées suivant la direction longitudinale de la lame.

De même, le porte-transducteur 4 est monté pivotant autour d'un axe parallèle à l'axe longitudinal de la lame, par l'intermédiaire de deux pivots 17 engagés dans les parties d'extrémité 14 et 15 en forme de boucles des deux autres bras 12 et 13 qui sont alignés suivant une direction longitudinale de la lame 1.

Les axes de pivotement des deux porte-transducteurs 3 et 4 parallèles à la direction longitudinale de la lame 1 sont espacés l'un de l'autre dans une direction transversale par rapport à la lame et disposés de manière équidistante de part et d'autre de l'axe médian longitudinal 18 de la lame 1, du fait qu'ils sont fixés à l'extrémité des bras 12 et 13 de direction transversale.

La partie centrale du support 5 porte un ressort de plaquage courbe 19 obtenu par formage et dont une extrémité 19a est maintenue en position par soudage sur une face du support 5 de la lame et dont la seconde extrémité 19b est libre et peut se déplacer par glissement sur le support 5. Le ressort 19 présente une surface convexe dirigée à l'opposé de la face du support 5.

Lorsque la tête de mesure 2 est introduite dans le passage annulaire 8 pour venir en position de contrôle, comme représenté sur la figure 2, la lame courbe du ressort de rappel 19 vient en contact par sa partie convexe externe avec la surface extérieure de la manchette thermique 7 et subit une flexion avec glissement de l'extrémité 19b sur la surface du support 5. Du fait de la flexion, la lame courbe du ressort 19 exerce une force de rappel dans la direction radiale de l'adaptateur 6 et de la manchette 7 assurant le plaquage de la tête de contrôle et de mesure 2 de la sonde contre la paroi intérieure de l'adaptateur 6. La force de rappel en direction de la surface intérieure de l'adaptateur 6 est transmise aux porte-transducteurs 3 et 4 par l'intermédiaire des bras élastiques 12 et 13, de sorte que les porte-transducteurs 3 et 4 sont parfaitement plaqués contre la surface intérieure de l'adaptateur 6 sur laquelle on réalise le contrôle.

Comme il est visible sur la figure 2, les surfaces extérieures des porte-transducteurs 3 et 4 présentent une courbure analogue à la courbure de la surface intérieure de l'adaptateur 6, pour assurer un contact parfait entre les porte-transducteurs et la surface à contrôler.

En outre, les bras 12 et 13 constitués sous la forme de lames de ressorts élastiques de faible épaisseur peuvent prendre, sous l'effet de la force de rappel exercée par le ressort 19, une courbure identique à la courbure de l'espace annulaire 8. La mise en place des porte-transducteurs 3 et 4 dans une position parfaitement plaquée contre la surface intérieure de l'adaptateur 6 est rendue possible du fait du montage pivotant de ces porte-transducteurs à l'extrémité des bras 12 et 13. De ce fait, les porte-transducteurs 3 et 4 peuvent être parfaitement orientés suivant la direction de la paroi intérieure cylindrique de l'adaptateur 6.

Chacun des porte-transducteurs 3, 4 est de plus relié à l'extrémité d'un conduit 20 permettant d'amener un liquide de couplage tel que de l'eau dans une zone voisine de la partie de paroi interne de l'adaptateur 6 sur laquelle on effectue le contrôle.

Les conduits 20 sont constitués par des tubes fixés sur la lame 1 dans une direction longitudinale et comportant des parties d'extrémité qui sont pliées vers l'extérieur de manière à être engagées sur des embouts solidaires des supports 3 et 4. Les tubes 20 présentent une souplesse suffisante pour être pliés et engagés sur les embouts de raccordement des porte-transducteurs 3 et 4 et pour accompagner le pivotement des porte-transducteurs 3 et 4 par rapport au support 5, lors de la mise en place de la tête de contrôle 2. Les tubes 20 présentent cependant une rigidité suffisante pour assurer le maintien des porte-transducteurs 3 et 4 dans une position facilitant leur introduction dans le passage annulaire 8.

Les porte-transducteurs 3 et 4 sont également reliés, au niveau des pivots 17 et 16, à des conducteurs électriques 21 également portés par la lame 1 et disposés dans une direction longitudinale sur la lame 1, jusqu'à leurs parties d'extrémité qui sont raccordées aux porte-transducteurs au niveau des pivots 16 et 17.

Les tubes d'alimentation 20 en liquide de couplage et les conducteurs 21 sont reliés aux porte-transducteurs par l'intermédiaire de connecteurs spéciaux pour câbles coaxiaux.

Les conducteurs électriques 21 sont reliés, par l'intermédiaire des connecteurs, à des transducteurs ultrasonores 23 et 24 montés sur les porte-transducteurs 3 et 4 respectivement.

Le transducteur ultrasonore 23 est alimenté en courant électrique par l'un des conducteurs 21 et constitue un émetteur. Le second transducteur ultrasonore 24 monté sur le porte-transducteur 4 est relié à un conducteur 21, par l'intermédiaire d'un pré-amplificateur 22 et constitue un récepteur recueillant les signaux de mesure qui sont transmis à une unité d'exploitation par le conducteur électrique 21, après amplification dans le pré-amplificateur 22.

De préférence, l'émetteur est réalisé en une céramique ou un composite à base de céramique piézoélectrique et le récepteur d'un polymère ou d'un co-polymère piézoélectrique ayant la structure et les propriétés d'une feuille en matière plastique.

En effet, cette combinaison permet d'obtenir à la fois de très bonnes conditions d'émission et de réception des ultrasons.

Cependant, les matériaux peuvent être de même nature et judicieusement choisis afin d'obtenir une sensibilité équivalente en émission ou réception afin de pouvoir utiliser indifféremment les transducteurs comme émetteurs et comme récepteurs.

On peut par exemple utiliser comme éléments piézo-électriques d'émission et de réception, des éléments piézo-composites à base de céramique. De tels éléments sont constitués de bâtonnets découpés dans un bloc de matière céramique, d'une épaisseur de l'ordre de 50 µm qui sont ensuite noyés dans une matière polymère à base de polyuréthane.

Les éléments sont arasés sur leurs deux faces qui sont ensuite métallisées.

Sur la figure 5, on a représenté une variante de réalisation 1' d'une lame d'un dispositif de contrôle suivant l'invention.

La partie d'extrémité 5' de la lame 1' constituant le support des porte-transducteurs qui comporte des bras de direction transversale 12' et 13' pour le montage pivotant des porte-transducteurs comporte un ressort de rappel 19' fixé dans sa partie centrale qui est constitué par une simple lame courbe relevée par rapport à la surface de la lame, de manière que son extrémité dans son état non contraint se trouve à une certaine distance du support 5' de la lame.

Lorsque la tête de mesure 2' constituant la partie d'extrémité de la lame 1' est introduite dans le passage annulaire donnant accès à la surface de l'adaptateur à contrôler, le ressort 19' subit une flexion en direction de la surface du support 5' et exerce une force de rappel dans la direction radiale de l'adaptateur, comme le ressort 19 représenté sur la figure 3 dont l'extrémité 19b est montée glissante sur la surface du support 5'.

Bien que la réalisation du support 19' sous la forme d'une simple lame courbe présente des avantages quant à sa simplicité de réalisation, par rapport à un ressort courbe 19 tel que représenté sur la figure 3, la lame 19' est susceptible de s'accrocher et de se replier au moment de son introduction dans le passage tubulaire. Ce risque n'existe pas avec le ressort courbe 19 dont la forme est représentée sur la figure 3.

Sur la figure 6, on a représenté la tête de contrôle 2 d'un dispositif de contrôle suivant l'invention en position de contrôle d'une partie de la surface interne d'un adaptateur 6 comportant une fissure 25 dans une direction sensiblement radiale et sur une partie importante de l'épaisseur de la paroi de l'adaptateur 6.

Cette position de contrôle peut être obtenue pendant le déplacement de la tête de contrôle 2 en translation suivant la direction axiale et en rotation de la tête 2 à l'intérieur du passage annulaire 8, par exemple en utilisant un dispositif de déplacement de la lame du dispositif de contrôle, tel que décrit dans la demande de brevet FR-A-92-15788.

Dans la position de la tête de contrôle 2 représentée sur la figure 6, les transducteurs 23 et 24 fixés sur les porte-transducteurs 3 et 4 respectivement sont dans des dispositions sensiblement symétriques par rapport à la fissure 25.

Le transducteur 23 qui est alimenté en courant électrique produit un faisceau d'ultrasons 26 qui est émis en direction de la fissure 25. Le faisceau 26 est reçu après réflexion, par le transducteur 24 qui produit des signaux représentatifs des caractéristiques de la fissure 25 qui sont amplifiés par le pré-amplificateur 22 puis transmis par les conducteurs 21 à une unité de traitement.

La disposition des deux transducteurs de manière sensiblement symétrique de part et d'autre de la fissure 25 permet d'obtenir des signaux qui sont exploitables pour effectuer des mesures de dimensions de la fissure 25.

En particulier, il est possible de déterminer la profondeur de pénétration de la fissure 25 à l'intérieur de la paroi de l'adaptateur 6.

Le fait que les deux transducteurs soient écartés l'un de l'autre dans la direction circonférentielle de l'espace annulaire 8 permet de réaliser un balayage complet de la fissure 25 par le faisceau d'ultrasons de manière à permettre un dimensionnement de la fissure dans le sens de l'épaisseur de la paroi de l'adaptateur.

Le dispositif de contrôle suivant l'invention permet donc de réaliser la mise en place de la sonde de contrôle comportant un transducteur émetteur d'ultrasons et un transducteur récepteur, de manière à pouvoir effectuer dans de très bonnes conditions l'examen d'une surface cylindrique telle que la surface intérieure d'un adaptateur, depuis un espace annulaire de très faible largeur en contact avec cette surface cylindrique. Ce résultat est obtenu grâce à l'utilisation de supports de transducteurs montés pivotants autour d'axes ayant une direction longitudinale parallèle à l'axe de la surface cylindrique.

En outre, le fait d'utiliser un transducteur émetteur et un transducteur récepteur espacés l'un de l'autre suivant une direction circonférentielle de la surface cylindrique pendant le contrôle permet de réaliser un balayage complet de la paroi à examiner et un dimensionnement des défauts présents dans cette paroi, ce qui n'est pas possible, lorsqu'on utilise un seul transducteur d'ultrasons placé dans une position de contrôle, dans l'alignement radial de la fissure.

L'invention ne se limite pas aux modes de réalisation qui ont été décrits.

C'est ainsi que les porte-transducteurs peuvent avoir une disposition différente de celle qui a été décrite et que le support constitué par la partie d'extrémité de la lame peut être réalisé d'une manière différente de celle qui a été décrite.

La lame allongée constituant la partie du dispositif permettant la mise en place de la sonde et son déplacement le long de la surface à contrôler peut présenter une structure différente de celle qui a été décrite.

Le déplacement de la sonde par l'intermédiaire de la lame peut être réalisé par tout moyen autre que ceux décrits dans la demande de brevet FR-A-92-15788.

En outre, il est possible d'utiliser une tête de contrôle à l'extrémité de la lame comportant un nombre de porte-transducteurs et de transducteurs supérieur à deux.

On peut utiliser par exemple trois ou quatre porte-transducteurs portant eux-mêmes un ou plusieurs transducteurs qui peuvent être utilisés comme émetteurs ou récepteurs.

La disposition du pré-amplificateur intégré aux porte-transducteurs sur lequel est fixé le récepteur permet de réaliser un gain important sur l'intensité du signal de mesure, ce gain pouvant être de l'ordre de 30 dB. Cependant, il est également possible de ne pas utiliser d'étage de pré-amplification intégré au porte-transducteur sur lequel est monté le récepteur.

Dans le cas où l'on utilise des éléments piézo-composites qui peuvent être émetteurs ou récepteurs, on associe à chacun d'entre eux un préamplificateur bidirectionnel émetteur/récepteur.

Les deux voies du préamplificateur doivent être équilibrées en puissance pour assurer le fonctionnement en émission et en réception.

On peut ainsi, en permutant les fonctions émettrices et réceptrices de deux élémnts d'une sonde, effectuer le contrôle de la paroi de l'adaptateur suivant deux sens de propagation des ondes ultrasonores, en un seul passage de la sonde.

Les porte-transducteurs peuvent avoir une structure quelconque, les transducteurs pouvant être fixés sur les porte-transducteurs par tout moyen, par exemple par collage ou par fixation mécanique.

La lame du dispositif à l'extrémité de laquelle est fixée la tête de mesure est de préférence en acier inoxydable austénitique.

Il est bien évident que les différents composants énumérés ci-dessus peuvent être réalisés de manière équivalente par d'autres moyens, l'homme de métier pouvant adapter la conception et la construction du dispositif à l'opération de contrôle à réaliser.

L'invention ne s'applique pas seulement au contrôle des surfaces intérieures d'adaptateurs mais au contrôle de toute surface cylindrique, concave ou convexe qui n'est accessible que par l'intermédiaire d'un espace de faible largeur dans la direction radiale de la surface cylindrique, cet espace de faible largeur en contact avec la surface à contrôler pouvant être d'une forme annulaire ou d'une autre forme.

Enfin, le dispositif suivant l'invention peut être appliqué de manière très large dans le domaine du contrôle d'appareils ou d'installations comportant en particulier des parties tubulaires de forme cylindrique.

## Revendications

1. Dispositif de contrôle non destructif par ultrasons d'une paroi cylindrique (6) accessible par un passage annulaire (8) de faible largeur dans la direction radiale de la paroi cylindrique (6), comportant une lame (1) dont l'épaisseur est inférieure à la largeur dans la direction radiale du passage annulaire (8) portant au moins une sonde de contrôle (2) au voisinage de l'une de ses extrémités, la sonde (2) comportant un premier transducteur d'ultrasons (23) constituant un émetteur et un second transducteur d'ultrasons (24) constituant un récepteur, **caractérisé par le fait que** le premier et le second transducteurs (23, 24) sont montés pivotants, sur une partie d'extrémité de la lame (1) comportant deux paires de bras (12, 13) sensiblement perpendiculaires à la direction longitudinale de la lame (1) constitués sous la forme de lames de ressort élastiques, autour de deux axes parallèles à la direction longitudinale de la lame (1), dans des dispositions écartées l'une de l'autre dans la direction transversale de la lame (1), de manière à se placer dans le passage annulaire (8) dans deux positions écartées l'une de l'autre dans une direction circonférentielle du passage annulaire (8).

2. Dispositif suivant la revendication 1, **caractérisé par le fait que** le premier et le second transducteurs d'ultrasons (23, 24) sont fixés respectivement sur un premier et sur un second porte-transducteurs (3, 4) montés pivotants sur le support (5), par l'intermédiaire de pivots (16, 16', 17) engagés dans des parties enroulées en forme de boucles (14, 15) des bras (12, 13) de la partie d'extrémité de la lame (1) constituant un support (5) pour le premier et le second porte-transducteurs (3, 4).

3. Dispositif suivant l'une quelconque des revendications 1 et 2, **caractérisé par le fait que** le support (5) à l'extrémité de la lame (1) comporte de plus un ressort de rappel (19, 19') du support (5) de la lame (1), à l'intérieur de l'espace annulaire (8), dans une direction radiale de la paroi cylindrique (6).

4. Dispositif suivant la revendication 3, **caractérisé par le fait que** le ressort de rappel (19) présente la forme d'une lame courbe ayant une extrémité (19a) solidaire d'une face du support (5) de la lame (1), une extrémité (19b) montée glissante sur la surface du support (5) et une partie convexe dirigée vers l'extérieur par rapport à la face du support (5).

5. Dispositif suivant la revendication 3, **caractérisé par le fait que** le ressort de rappel (19') est constitué par une lame courbe (19') ayant une extrémité fixée sur une face du support (5) et une extrémité libre éloignée de la face du support (5).

6. Dispositif suivant l'une quelconque des revendications 1 à 5, **caractérisé par le fait que** le premier transducteur (23) utilisé comme émetteur est en un matériau contenant une céramique piézo-électrique et que le second transducteur (24) utilisé comme récepteur est en un matériau contenant un polymère piézo-électrique.

7. Dispositif suivant l'une quelconque des revendications 1 à 5, **caractérisé par le fait que** le premier et le second transducteurs (23, 24) sont tous deux réalisés en un matériau piézo-composite et sont susceptibles d'être utilisés comme émetteur et comme récepteur.

8. Dispositif suivant la revendication 2, **caractérisé par le fait qu'**un pré-amplificateur (22) est fixé sur le second porte-transducteur (4) et relié au second transducteur (24) pour l'amplification des signaux de mesure reçus par le second transducteur (24).

9. Dispositif suivant la revendication 7, **caractérisé par le fait qu'**un préamplificateur bidirectionnel est associé à chacun des premier et second transducteurs (23, 24).

10. Dispositif selon la revendication 2, **caractérisé par le fait qu'**au moins un tube (20) d'alimentation en liquide de couplage et au moins un conducteur électrique (21) sont reliés à chacun des porte-transducteurs (3, 4) pour l'alimentation de la zone de contrôle en liquide de couplage, l'alimentation électrique du premier transducteur émetteur (23) et le recueil des signaux de mesure du transducteur récepteur (24).

11. Dispositif suivant la revendication 10, **caractérisé par le fait que** les conduits (20) d'alimentation en liquide de couplage et les conducteurs électriques (21) sont fixés sur la lame (1) suivant sa direction longitudinale et comportent une extrémité raccordée à l'un des porte-transducteurs (3, 4) qui s'écarte transversalement de la direction longitudinale de la lame (1).

12. Dispositif suivant l'une quelconque des revendications 10 et 11, **caractérisé par le fait que** les conduits (20) et les conducteurs (21) sont reliés aux porte-transducteurs (3, 4), par l'intermédiaire de connecteurs pour câbles coaxiaux.

13. Dispositif suivant l'une quelconque des revendications 1 à 12, **caractérisé par le fait que** la lame (1) comporte des découpes (9, 10) délimitant les pattes (11) qui sont pliées de manière à comporter une partie dans un plan parallèle au plan de la lame (1) pour assurer le guidage et le maintien de la lame (1) dans le passage annulaire (8).

## Patentansprüche

1. Vorrichtung zur zerstörungsfreien Ultraschallprüfung einer über einen Ringkanal (8) von in radialer Richtung geringer Dicke zugänglichen Zylinderwand (6) mit einem Blatt (1), dessen Dicke geringer ist als die Breite des Ringkanals (8) in radialer Richtung und die mindestens eine Prüfsonde (2) in der Nähe einer ihrer Enden trägt, welche einen ersten Ultraschallwandler (23) aufweist, der einen Sender bildet, und einen zweiten Ultraschallwandler (24), der einen Empfänger bildet, **dadurch gekennzeichnet, dass** der erste und zweite Wandler (23, 24) verschwenkbar an einem Endteil des Blatts (1) befestigt sind, welches zwei Paare von zur Längsrichtung des Blatts (1) im Wesentlichen senkrechten Armen (12, 13) aufweist, die sich in Form elastischer Federblätter um zwei zur Längsrichtung des Blatts (1) parallele Achsen in Anordnungen befinden, die in Querrichtung des Blatts (1) derart voneinander beabstandet sind, dass sie in zwei in einer Umfangsrichtung des Ringkanals (8) voneinander beabstandeten Positionen liegen.

2. Vorrichtung nach Anspruch 1, **dadurch gekennzeichnet, dass** der erste und zweite Ultraschallwandler (23, 24) an einem ersten beziehungsweise einem zweiten Wandler-Halter (3, 4) befestigt sind, die über Drehzapfen (16, 16', 17) verschwenkbar am Träger (5) befestigt sind, die in zu Schlaufen (14, 15) aufgerollten Abschnitten der Arme (12, 13) des Endteils des Blatts (1) eingefügt sind, die einen Träger (5) für den ersten und zweiten Wandler-Halter (3, 4) bilden.

3. Vorrichtung nach einem der Ansprüche 1 und 2, **dadurch gekennzeichnet, dass** der Träger (5) am Ende des Blatts (1) außerdem eine Rückholfeder (19, 19') für den Träger (5) des Blatts (1) innerhalb des Ringkanals (8) in einer radialen Richtung der Zylinderwand (6) aufweist.

4. Vorrichtung nach Anspruch 3, **dadurch gekennzeichnet, dass** die Rückholfeder (19) die Form eines gekrümmten Blatts mit einem Ende (19a) aufweist, das mit einer Seite des Trägers (5) des Blatts (1) fest verbunden ist, wobei das andere Ende (19b) auf der Oberfläche des Trägers (5) gleitend befestigt ist, und wobei das Blatt einen bezüglich der Seite des Trägers (5) nach außen geneigten konvexen Abschnitt aufweist.

5. Vorrichtung nach Anspruch 3, **dadurch gekennzeichnet, dass** die Rückholfeder (19') von einem gekrümmten Blatt (19') mit einem an einer Seite des Trägers (5) befestigten Ende und einem von der Seite des Trägers (5) entfernten, freien Ende gebildet wird.

6. Vorrichtung nach einem der Ansprüche 1 bis 5, **dadurch gekennzeichnet, dass** der erste, als Sender verwendete Wandler (23) aus einem Material besteht, das eine piezoelektrische Keramik enthält, und dass der zweite, als Empfänger verwendete Wandler (24) aus einem Material besteht, das ein piezoelektrisches Polymer enthält.

7. Vorrichtung nach einem der Ansprüche 1 bis 5, **dadurch gekennzeichnet, dass** der erste und zweite Wandler (23, 24) beide aus Piezo-Komposit-Material hergestellt sind und als Sender und als Empfänger verwendet werden können.

8. Vorrichtung nach Anspruch 2, **dadurch gekennzeichnet, dass** ein Vorverstärker (22) am zweiten Wandler-Halter (4) befestigt und mit dem zweiten Wandler (24) zur Verstärkung der vom zweiten Wandler (24) erhaltenen Messsignale verbunden ist.

9. Vorrichtung nach Anspruch 7, **dadurch gekennzeichnet, dass** dem ersten und zweiten Wandler (23, 24) ein Zweiwege-Vorverstärker zugeordnet ist.

10. Vorrichtung nach Anspruch 2, **dadurch gekennzeichnet, dass** mindestens ein Rohr (20) zur Versorgung mit Koppelflüssigkeit und mindestens ein elektrischer Leiter (21) mit jedem der Wandler-Halter (3, 4) zur Versorgung des geprüften Bereichs mit Koppelflüssigkeit, zur elektrischen Versorgung des ersten Sender-Wandlers (23) und zur Aufnahme der Messsignale des Empfänger-Wandlers (24) verbunden sind.

11. Vorrichtung nach Anspruch 10, **dadurch gekennzeichnet, dass** die Leitungen (20) zur Versorgung mit Koppelflüssigkeit und die elektrischen Leiter (21) am Blatt (1) in dessen Längsrichtung befestigt sind und ein zweites Ende besitzen, das mit einem der Wandler-Halter (3, 4) verbunden ist, der quer zur Längsrichtung des Blatts (1) versetzt ist.

12. Vorrichtung nach einem der Ansprüche 10 und 11, **dadurch gekennzeichnet, dass** die Leitungen (20) und die Leiter (21) über Verbinder für Koaxialkabel mit den Wandler-Haltern (3, 4) verbunden sind.

13. Vorrichtung nach einem der Ansprüche 1 bis 12, **dadurch gekennzeichnet, dass** das Blatt (1) Ausschnitte (9, 10) aufweist, die Zungen (11) abgrenzen, welche derart gefaltet sind, dass sie einen Abschnitt in einer zur Ebene des Blatts (1) parallelen Ebene aufweisen, um die Führung und den Halt des Blatts (1) im Ringkanal (8) zu gewährleisten.

## Claims

1. Apparatus for non-destructive ultrasound monitoring of a cylindrical wall (6) which is accessible through a narrow annular passage (8) in the radial direction of the cylindrical wall (6), comprising a blade (1) the thickness of which is less than its width in the radial direction of the annular passage (8), carrying at least one monitoring probe (2) close to one of its ends, the probe (2) comprising a first ultrasound transducer (23) constituting an emitter and a second ultrasound transducer (24) constituting a receiver, **characterised in that** the first and second transducers (23, 24) are mounted, on an end portion of the blade (1) comprising two pairs of arms (12, 13) substantially perpendicular to the longitudinal direction of the blade (1) which are in the form of resilient spring leaves, so as to be pivotable about two axes which are parallel to the longitudinal direction of the blade (1), in arrangements spaced from one another in the transverse direction of the blade (1), so as to be situated in the annular passage (8) in two positions spaced from one another in a circumferential direction of the annular passage (8).

2. Apparatus according to claim 1, **characterised in that** the first and second ultrasound transducers (23, 24) are fixed on a first and second transducer carrier (3, 4), respectively, pivotally mounted on the support (5), by means of pivots (16, 16', 17) engaging in coiled portions forming loops (14, 15) in the arms (12, 13) of the end portion of the blade (1) constituting a support (5) for the first and second transducer carriers (3, 4).

3. Apparatus according to one of claims 1 and 2, **characterised in that** the support (5) at the end of the blade (1) further comprises a return spring (19, 19') for returning the support (5) of the blade (1), inside the annular space (8), in a radial direction of the cylindrical wall (6).

4. Apparatus according to claim 3, **characterised in that** the return spring (19) is in the form of a curved blade having one end (19a) fixedly attached to one face of the support (5) of the blade (1), one end (19b) slidably mounted on the surface of the support (5) and a convex part directed outwards relative to the surface of the support (5).

5. Apparatus according to claim 3, **characterised in that** the return spring (19') is formed by a curved blade (19') having one end fixed to one face of the support (5) and a free end remote from the surface of the support (5).

6. Apparatus according to any one of claims 1 to 5, **characterised in that** the first transducer (23) used as an emitter is made of a material containing a piezoelectric ceramic and **in that** the second transducer (24) used as a receiver is made of a material containing a piezoelectric polymer.

7. Apparatus according to any one of claims 1 to 5, **characterised in that** the first and second transducers (23, 24) are both made of a piezo-composite material and are capable of being used as an emitter and a receiver.

8. Apparatus according to claim 2, **characterised in that** a pre-amplifier (22) is fixed to the second transducer carrier (4) and connected to the second transducer (24) for amplifying the measuring signals received by the second transducer (24).

9. Apparatus according to claim 7, **characterised in that** a bidirectional pre-amplifier is associated with each of the first and second transducers (23, 24).

10. Apparatus according to claim 2, **characterised in that** at least one tube (20) for supplying coupling fluid and at least one electrical conductor (21) are connected to each of the transducer carriers (3, 4) for supplying the monitoring zone with coupling fluid, supplying electricity to the first emitting transducer (23) and collecting the measuring signals from the receiving transducer (24).

11. Apparatus according to claim 10, **characterised in that** the coupling fluid supply ducts (20) and the electrical conductors (21) are fixed to the blade (1) in the longitudinal direction thereof and have one end connected to one of the transducer carriers (3, 4) which is transversely spaced from the longitudinal direction of the blade (1).

12. Apparatus according to one of claims 10 and 11, **characterised in that** the ducts (20) and the conductors (21) are connected to the transducer carriers (3, 4) via coaxial cable connectors.

13. Apparatus according to one of claims 1 to 12, **characterised in that** the blade (1) comprises cutouts (9, 10) defining tabs (11) which are bent so as to have one part in a plane parallel to the plane of the blade (1) to ensure that the blade (1) is guided and retained in the annular passage (8).
